# FASCICULE DE BREVET EUROPEEN

(11) **EP 2 918 494 B1**
(45) Date de publication et mention de la délivrance du brevet: **05.12.2018**
(21) Numéro de dépôt: 15156353.3
(22) Date de dépôt: 24.02.2015
(51) Int. Cl.: B64C 25/40

(54) **Atterrisseur d'aéronef**
Fahrwerk eines Luftfahrzeugs
Aircraft landing gear

(30) Priorité: 12.03.2014 FR 1452063
(43) Date de publication de la demande: 16.09.2015
(73) Titulaire: Safran Landing Systems, 78140 Vélizy-Villacoublay (FR)
(72) Inventeur: Mazarguil, Nicolas, 78140 Velizy-Villacoublay (FR)
(74) Mandataire: Parzy, Benjamin Alain

(56) Documents cités:
- EP-A1- 2 581 305
- US-A- 2 460 387
- US-A- 3 059 712

## Description

L'invention concerne un atterrisseur d'aéronef sur lequel est monté un actionneur d'entraînement en rotation d'une roue, ledit actionneur comportant une vis sans fin coopérant avec des obstacles s'étendant en saillie d'une face latérale de la jante de la roue.

### ARRIERE PLAN DE L'INVENTION

Un certain nombre de raisons poussent les constructeurs d'aéronefs à tenter de motoriser les roues des aéronefs, en utilisant notamment des actionneurs d'entraînement équipés de moteurs électriques. Une telle motorisation présente en effet des avantages environnementaux et économiques importants (réduction de la consommation de carburant, réduction du bruit pendant les phases de roulage, etc.), et permet de réaliser des fonctions nouvelles : manoeuvre de l'aéronef lorsque les moteurs de propulsions sont éteints, roulage en marche arrière, pilotage de l'aéronef au sol à distance, etc (voir par exemple le document US3059712).

Les concepteurs et intégrateurs des actionneurs d'entraînement des roues d'aéronef doivent rendre les actionneurs conformes à de nombreuses exigences techniques particulièrement contraignantes spécifiées par les constructeurs d'aéronefs.

L'augmentation de la masse de l'aéronef résultant de l'intégration des actionneurs d'entraînement doit être maîtrisée et raisonnable, de manière à ne pas rendre négligeable le bénéfice en matière de consommation de carburant apporté par l'utilisation de ces actionneurs. Or, les vitesses de rotation auxquelles doivent être entraînées les roues de l'aéronef et les couples que doivent développer les actionneurs d'entraînement sont importants et nécessitent des actionneurs lourds et encombrants.

Il est de plus important d'assurer que la présence des actionneurs d'entraînement ne perturbe pas les opérations de maintenance effectuées sur les atterrisseurs de l'aéronef. En particulier, il est souhaitable de réduire au maximum l'impact de la présence de ces actionneurs sur le temps de démontage d'une roue, ainsi que sur le temps de démontage d'un pneumatique de la roue sur laquelle il est monté.

Il est de plus requis que les actionneurs d'entraînement puissent être installés facilement sur les atterrisseurs de différents types d'aéronefs sans effort d'intégration important. Or, les interfaces mécaniques des jambes d'atterrisseurs, des roues et des freins équipant les roues peuvent varier de manière importante entre deux aéronefs de types différents.

### OBJET DE L'INVENTION

L'invention a pour objet un atterrisseur d'aéronef comportant un actionneur d'entraînement conforme aux exigences évoquées plus tôt.

### RESUME DE L'INVENTION

En vue de la réalisation de ce but, on propose un atterrisseur d'aéronef comprenant un essieu et une roue qui comporte une jante montée pour tourner sur l'essieu autour d'un premier axe de rotation, l'atterrisseur comprenant en outre un actionneur d'entraînement en rotation de la roue. Selon l'invention, la jante comprend des obstacles qui s'étendent en saillie d'une face latérale de la jante et l'actionneur d'entraînement comporte une vis sans fin montée tournante autour d'un deuxième axe de rotation perpendiculaire au premier axe de rotation et adaptée à coopérer avec les obstacles de la jante pour entraîner la roue en rotation.

Les obstacles constituent une couronne dentée avec laquelle coopère la vis sans fin de l'actionneur d'entraînement, ladite couronne dentée étant simple à réaliser et relativement légère puisque constituée uniquement des obstacles et de leurs moyens de fixation à la jante. De plus, l'utilisation de la vis sans fin permet d'obtenir une liaison mécanique présentant un rapport de démultiplication important. On peut ainsi réduire le couple que doit développer un moteur électrique de l'actionneur d'entraînement tout en augmentant la vitesse dudit moteur, ce qui permet de réduire l'encombrement et la masse dudit moteur de l'actionneur.

L'utilisation d'obstacles s'étendant en saillie de la face latérale de la jante permet, lorsque ces obstacles sont placés à une certaine distance du centre de la jante, de positionner l'actionneur d'entraînement à l'écart d'une zone très encombrée située entre la jambe de l'atterrisseur et la roue. On dispose ainsi de suffisamment d'espace pour éloigner l'actionneur d'entraînement lorsqu'il n'est pas nécessaire que celui-ci entraîne la roue en rotation. Ainsi, au moment du démontage de la roue, l'actionneur d'entraînement est éloigné de la roue et désaccouplé mécaniquement de celle-ci, ce qui facilite le démontage. De même, la présence d'obstacles saillant d'une face latérale de la jante ne perturbe pas le démontage d'un pneumatique de la roue.

Enfin, il est relativement simple et peu coûteux d'utiliser les actionneurs d'entraînement sur des atterrisseurs d'aéronefs de différents types. Il suffit en effet de monter les obstacles sur la face latérale des jantes des roues à entraîner et de concevoir un support mécanique portant l'actionneur d'entraînement et adapté aux atterrisseurs en question. Il est ainsi nécessaire ni d'apporter d'importantes modifications aux interfaces mécaniques des roues et des atterrisseurs pour accueillir les actionneurs, ni de modifier les actionneurs d'entraînement en fonction des atterrisseurs.

### BREVE DESCRIPTION DES DESSINS

L'invention sera mieux comprise à la lumière de la description qui suit en référence aux figures des dessins annexés parmi lesquelles :
- la figure 1 est une vue en perspective d'un atterrisseur de l'invention portant deux roues adaptées chacune à être entraînée en rotation par un actionneur d'entraînement, les actionneurs d'entraînement étant dans une position d'engrènement, le pneumatique de l'une de ces deux roues ayant été omis pour plus de clarté ;
- la figure 2 est une vue de face de l'atterrisseur analogue à celle de la figure 1 ;
- la figure 3 est une vue en coupe de l'atterrisseur de l'invention, la coupe étant réalisée au niveau d'un plan parallèle aux faces latérales des roues de l'atterrisseur et passant par le centre d'une jambe de l'atterrisseur ;
- la figure 4a est une vue de dessus et en perspective de moyens d'entraînement comportant un premier et un deuxième actionneurs d'entraînement, un actionneur d'engrènement et un support d'actionneurs, les actionneurs d'entraînement étant dans une position de libération ;
- la figure 4b est une vue analogue à celle de la figure 4a, sur laquelle les actionneurs d'entraînement sont dans une position d'engrènement ;
- la figure 5a est une vue de dessous analogue à celle de la figure 4a ;
- la figure 5b est une vue de dessous analogue à celle de la figure 4b ;
- la figure 6a est une vue arrière analogue à celle de la figure 4a ;
- la figure 6b est une vue arrière analogue à celle de la figure 4b ;
- les figures 7a et 7b représentent l'un des obstacles avec lesquels coopère la vis sans fin d'un actionneur d'entraînement, dans un premier mode de réalisation de l'invention ;
- la figure 8 représente un obstacle selon un deuxième mode de réalisation de l'invention.

### DESCRIPTION DETAILLEE DE L'INVENTION

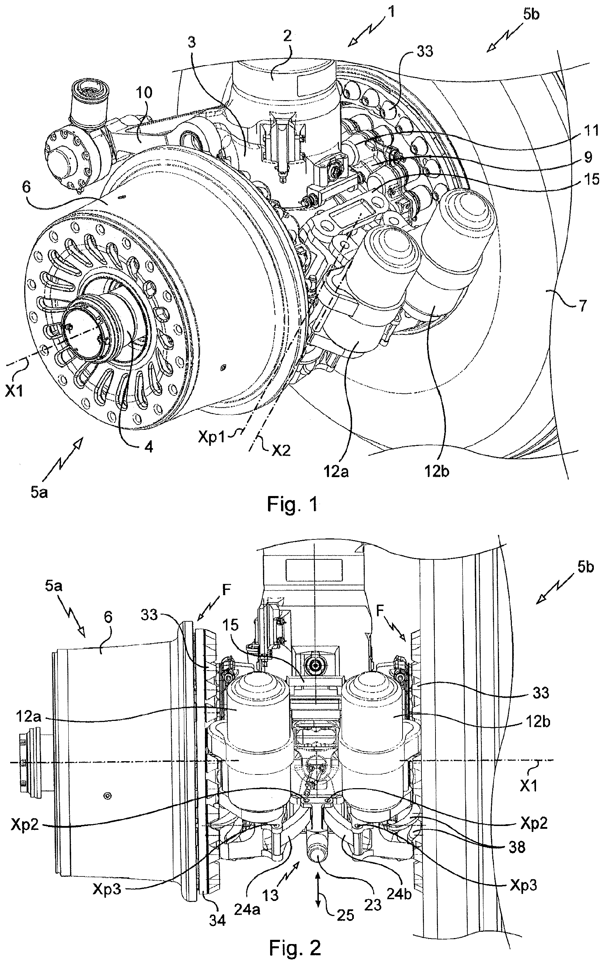

En référence aux figures 1 et 2, l'atterrisseur 1 de l'invention selon un premier mode de réalisation comporte ici de manière classique un caisson 2 articulé à la structure d'un aéronef dans lequel une tige coulissante 3 est montée à coulissement télescopique. La tige coulissante 3, représentée ici en position entièrement rétractée, porte à son extrémité un essieu 4 supportant une première roue 5a et une deuxième roue 5b. Un compas 10 relie le caisson 2 et la tige coulissante 3 pour assurer le coulissement sans rotation de la tige coulissante 3.

Chaque roue 5 comporte une jante 6 qui porte un pneumatique 7 et qui est montée pour tourner sur l'essieu 4 au moyen de roulements autour d'un axe de l'essieu 4 ou premier axe de rotation X1. Chaque roue 5 est en outre équipée d'un frein adapté à freiner la roue 5, le frein comportant une pile de disques de carbone s'étendant dans la jante 6 de la roue 5 et non visible sur les figures, une couronne 9 fixée sur l'essieu 4, et une pluralité d'actionneurs électromécaniques 11 portés par la couronne 9 et adaptés à appliquer sélectivement un effort de freinage sur la pile de disques.

L'atterrisseur 1 de l'invention comporte en outre des moyens d'entraînement en rotation des roues 5 de l'aéronef, lesdits moyens d'entraînement comportant un premier actionneur d'entraînement en rotation 12a de la première roue 5a, un deuxième actionneur d'entraînement en rotation 12b de la deuxième roue 5b, un actionneur d'engrènement 13, et un support d'actionneurs 15 monté sur la tige coulissante 3 de l'atterrisseur 1 et portant les premier et deuxième actionneurs d'entraînement 12a, 12b et l'actionneur d'engrènement 13.

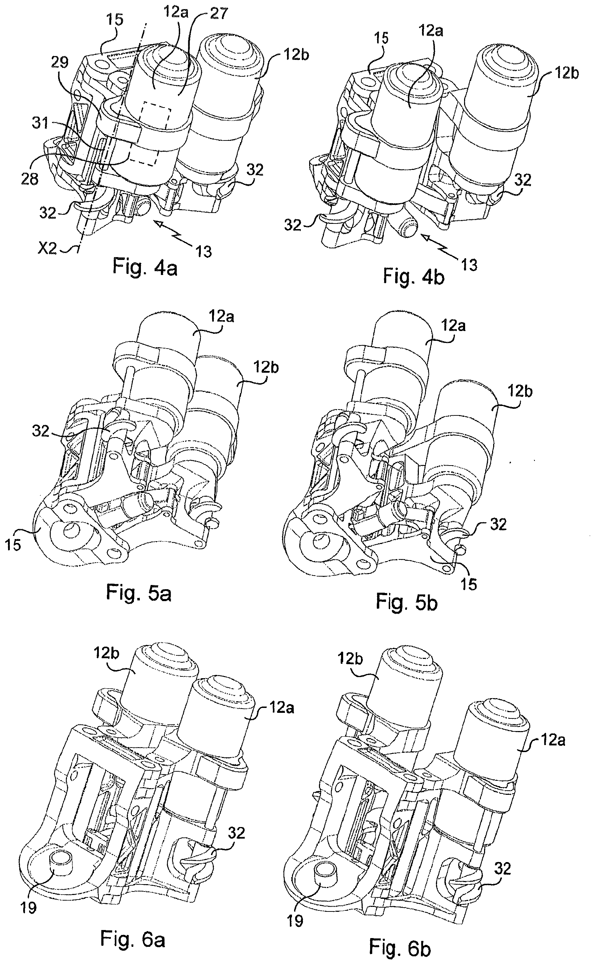

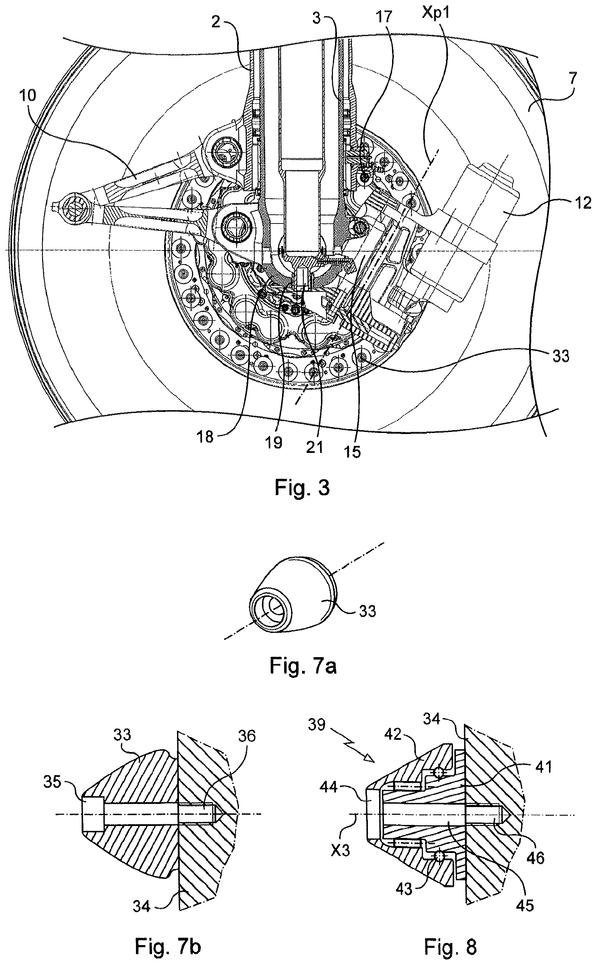

En référence à la figure 3, le support d'actionneurs 15 est fixé à un axe de compas arrière 17 lui-même solidaire de la tige coulissante 3, ainsi qu'à une tête sphérique 18 de la tige coulissante 3 via un plot tubulaire de centrage 19 (mieux visible sur les figures 6a et 6b) qui s'étend à l'intérieur de la tige coulissante 3 au travers d'un alésage 21 pratiqué dans celle-ci.

Le premier et le deuxième actionneurs d'entraînement 12a, 12b sont chacun montés pivotant sur le support d'actionneurs 15 autour de premiers axes de pivotement Xp1 parallèles situés de part et d'autre du support d'actionneurs 15 pour se rapprocher ou s'éloigner respectivement de la jante 6 de la première roue 5a et de la jante 6 de la deuxième roue 5b.

L'actionneur d'engrènement 13, quant à lui, comporte un moteur électrique, un organe d'actionnement 23, un premier bras 24a et un deuxième bras 24b. Le moteur électrique de l'actionneur d'engrènement 13 est adapté à déplacer sélectivement l'organe d'actionnement 23 en éloignant ou en rapprochant l'organe d'actionnement 23 du support d'actionneurs 15, selon un mouvement linéaire représenté par la double flèche 25 sur la figure 2.

Les premier et deuxième bras 24a, 24b sont montés chacun pivotant à l'une de leurs extrémités sur l'organe d'actionnement 23 autour de deuxièmes axes de pivotement Xp2 et à l'autre de leurs extrémités respectivement sur le premier et sur le deuxième actionneurs d'entraînement 12a, 12b autour de troisièmes axes de pivotement Xp3 situés sur les premier et deuxième actionneurs d'entraînement 12a, 12b (les axes de pivotement Xp2 et Xp3 sont visibles sur la figure 2). Les deuxièmes axes de pivotement Xp2 et les troisièmes axes de pivotement Xp3 sont tous parallèles aux premiers axes de pivotement Xp1. Ainsi, l'éloignement de l'organe d'actionnement 23 du support d'actionneurs 15 rapproche simultanément le premier et le deuxième actionneurs d'entraînement 12a, 12b des jantes 6 des première et deuxième roues 5a, 5b, et le rapprochement de l'organe d'actionnement 23 du support d'actionneurs 15 éloigne simultanément le premier et le deuxième actionneurs d'entraînement 12a, 12b des jantes 6 des première et deuxième roues 5a, 5b.

L'actionneur d'engrènement 13 est donc adapté à déplacer les actionneurs d'entraînement 12 simultanément entre une position d'engrènement, dans laquelle ils sont positionnés pour entraîner en rotation les roues 5, et une position de libération, dans laquelle ils sont éloignés des roues 5 et laissent celles-ci libres en rotation.

On décrit maintenant plus en détails le fonctionnement des actionneurs d'entraînement 12 et la manière dont ils coopèrent avec les roues 5 pour les entraîner en rotation lorsqu'ils sont dans la position d'engrènement. Comme les premier et deuxième actionneurs 12a, 12b fonctionnent de la même manière, leur fonctionnement sera décrit en référence à un unique actionneur d'entraînement 12 et à une unique roue 5.

En référence aux figures 4a à 6b, et notamment à la figure 4a, l'actionneur d'entraînement 12 comporte un corps d'actionneur 27, un moteur électrique 28 représenté schématiquement et positionné dans le corps d'actionneur 27, un réducteur 29, ainsi qu'un arbre de transmission 31 et une vis sans fin 32 reliée à l'arbre de transmission 31. L'arbre de transmission 31 et la vis sans fin 32 s'étendent à l'extérieur du corps d'actionneur 27. Le moteur électrique 28 de l'actionneur d'entraînement 12 est adapté à entraîner en rotation l'arbre de transmission 31 et donc la vis sans fin 32 via le réducteur 29 autour d'un deuxième axe de rotation X2 perpendiculaire à l'axe de l'essieu ou premier axe de rotation X1.

La jante 6 de la roue 5 comprend des obstacles 33 qui s'étendent en saillie d'une face latérale F de la jante 6 située en regard de l'actionneur d'entraînement 12 associé. Ces obstacles 33, visibles plus précisément sur les figures 7a et 7b, sont des galets amovibles 33 rapportés sur une couronne de support 34 fixée sur la circonférence de la face latérale F de la jante 6. Chaque galet 33 comporte un premier trou lisse 35 traversant le galet 33 de part et d'autre. Lorsque le galet 33 est monté sur la couronne de support 34, le premier trou lisse 35 est prolongé par un deuxième trou taraudé 36 formé dans la couronne de support 34. Le galet 33 est fixé sur la couronne de support 34 grâce à une vis s'étendant dans le premier trou lisse 35 et dans le deuxième trou taraudé 36.

Les galets 33 sont ici des pièces d'usure, destinées à être remplacées à une fréquence prédéterminée, par exemple à une fréquence égale à celle du remplacement des pneumatiques 7 des roues 5.

Lorsque l'actionneur d'entraînement 12 se trouve dans la position d'entraînement et lorsque le moteur électrique 28 de l'actionneur d'entraînement 12 est alimenté, la vis sans fin 32 coopère avec les galets 33 pour entraîner la roue en rotation. On note que, selon le sens de rotation du moteur électrique 28 et donc selon le sens de rotation de la vis sans fin 32, la roue 5 est entraînés en rotation dans un sens tendant soit à déplacer l'aéronef vers l'avant, soit à déplacer l'aéronef vers l'arrière.

La vis sans fin 32 de l'actionneur d'entraînement 12 comporte ici deux filets 38 (visibles sur la figure 1) : on augmente ainsi le rapport de démultiplication de la liaison entre la vis sans fin 32 et les galets 33, et on réduit les contraintes appliquées sur chaque filet 38 de ladite vis sans fin 32. On note aussi que les filets 38 présentent un angle d'hélice suffisamment important, au vu du coefficient de frottement de la liaison entre la vis sans fin 32 et les galets 33, pour rendre réversible cette liaison.

On munit si nécessaire l'actionneur 12 d'un dispositif de débrayage entre le réducteur 29 et la vis sans fin 32. Ce dispositif de débrayage permet de désaccoupler la vis sans fin 32 du réducteur 29, pour faciliter l'engrènement de la vis sans fin 32 et des galets 33 lorsque l'actionneur d'entraînement 12 vient en position d'engrènement alors que la roue 5 de l'aéronef a déjà une vitesse de rotation non nulle.

Dans un second mode de réalisation de l'invention et en référence à la figure 8, les galets 39 sont montés librement pivotants autour d'axes X3 parallèles au premier axe de rotation X1. Chaque galet 39 comporte ici une base 41 formant une bague intérieure fixe d'un roulement à billes, une partie supérieure 42 formant une bague extérieure du roulement à billes, et des billes 43 disposées sur un chemin de roulement de la bague extérieure. La partie supérieure 42 de chaque galet 39 comporte un premier trou taraudé 44. La base 41 comporte un deuxième trou taraudé 45 traversant la base 41 de part et d'autre et prolongeant le premier trou taraudé 44. Lorsque le galet 39 est monté sur la couronne de support 34, les premier et deuxième trous taraudés 44, 45 sont prolongés par un troisième trou taraudé 46 formé dans la couronne de support 34. Le galet 39 est fixé sur la couronne de support 34 grâce à une vis s'étendant dans les premier, deuxième et troisième trous taraudés 44, 45, 46.

L'invention n'est pas limitée aux modes de réalisation particuliers qui viennent d'être décrits, mais, bien au contraire, couvre toute variante entrant dans le cadre de l'invention tel que défini par les revendications.

Bien que l'on ait indiqué que les vis sans fin sont munies de deux filets, l'invention s'applique à des vis sans fin munies d'au moins un filet.

Bien que, pour chaque roue représentée ici, les galets soient montés sur la face latérale de la jante en étant rapportés sur un support intermédiaire, en l'occurrence sur une couronne de support elle-même fixée sur la surface latérale de la jante de la roue, il est parfaitement possible de rapporter directement les galets sur la face latérale de la jante, ou bien d'utiliser un support intermédiaire de forme différente.

De plus, bien que les roues soient ici des roues équipées de freins, l'invention s'applique bien sûr à un atterrisseur équipé de roues non munies de freins, tel qu'un atterrisseur auxiliaire d'avion.

## Revendications

1. Atterrisseur d'aéronef comprenant un essieu (4) et une roue (5) qui comporte une jante (6) montée pour tourner sur l'essieu (4) autour d'un premier axe de rotation (X1), l'atterrisseur comprenant en outre un actionneur d'entraînement en rotation (12) de la roue (5), **caractérisé en ce que** la jante (6) comprend des obstacles (33, 39) qui s'étendent en saillie d'une face latérale (F) de la jante et **en ce que** l'actionneur d'entraînement comporte une vis sans fin (32) montée tournante autour d'un deuxième axe de rotation (X2) perpendiculaire au premier axe de rotation (X1) et adaptée à coopérer avec les obstacles de la jante pour entraîner la roue en rotation.

2. Atterrisseur d'aéronef selon la revendication 1, dans lequel la vis sans fin comporte au moins un filet (38) présentant un angle d'hélice suffisamment important pour rendre réversible la liaison entre la vis sans fin (32) et les obstacles (33 ; 39).

3. Atterrisseur d'aéronef selon la revendication 1, dans lequel les obstacles sont amovibles et rapportés sur la face latérale (F) de la jante ou sur un support intermédiaire monté sur la face latérale de la jante.

4. Atterrisseur d'aéronef selon la revendication 3, dans lequel au moins un obstacle est fixé sur la face latérale de la jante grâce à au moins une vis qui traverse l'obstacle et qui est vissée dans la jante ou dans le support intermédiaire.

5. Atterrisseur d'aéronef selon l'une des revendications 3 ou 4, dans lequel les obstacles (39) sont montés librement pivotants autour d'axes (X3) parallèles à l'axe de rotation de la roue.

6. Atterrisseur d'aéronef selon l'une des revendications précédentes comprenant un essieu et des première et deuxième roues (5a, 5b) comportant chacune une jante (6) montée pour tourner sur l'essieu, l'atterrisseur comportant en outre :
- un premier actionneur d'entraînement en rotation (12a) de la première roue (5a) et un deuxième actionneur d'entraînement en rotation (12b) de la deuxième roue (5b) comportant chacun une vis sans fin (32) adaptée à coopérer respectivement avec les obstacles (33, 39) de la jante (6) de la première roue et avec les obstacles (33, 39) de la jante de la deuxième roue ;
- un actionneur d'engrènement (13) adapté à déplacer les premier et deuxième actionneurs d'entraînement simultanément entre une position d'engrènement dans laquelle la vis sans fin du premier et du deuxième actionneurs coopèrent respectivement avec les obstacles de la jante (6) de la première et de la deuxième roues, et une position de libération dans laquelle les vis sans fin sont éloignées des jantes des première et deuxième roues.

7. Atterrisseur d'aéronef selon la revendication 6, dans lequel les premier et deuxième actionneurs d'entraînement (12a, 12b) sont chacun montés pivotants sur l'atterrisseur pour se rapprocher ou s'éloigner des jantes, dans lequel l'actionneur d'engrènement comporte un organe d'actionnement (23) et un premier et un deuxième bras (24a, 24b) montés chacun pivotant à l'une de leurs extrémités sur l'organe d'actionnement et à l'autre de leurs extrémités respectivement sur le premier et sur le deuxième actionneur d'entraînement, de sorte qu'un déplacement rectiligne de l'organe d'actionnement (23) provoque un rapprochement ou un éloignement simultané des premier et deuxième actionneurs d'entraînement des jantes des première et deuxième roues.

## Patentansprüche

1. Luftfahrzeugfahrwerk, umfassend eine Radachse (4) und ein Rad (5), das eine Felge (6) umfasst, die auf der Radachse (4) drehbar um eine erste Drehachse (X1) gelagert ist, wobei das Fahrwerk ferner einen Drehantriebsaktor (12) zum Drehantrieb des Rades (5) umfasst, **dadurch gekennzeichnet, dass** die Felge (6) Hindernisse (33, 39) umfasst, die von einer Seitenfläche (F) der Felge vorstehen, und dass der Antriebsaktor eine Schnecke (32) umfasst, die drehbar um eine zweite Drehachse (X2) gelagert ist, die senkrecht zur ersten Drehachse (X1) und dazu geeignet ist, mit den Hindernissen der Felge zusammenzuwirken, um das Rad in Drehung anzutreiben.

2. Luftfahrzeugfahrwerk nach Anspruch 1, bei dem die Schnecke mindestens ein Gewinde (38) umfasst, das einen Schrägungswinkel aufweist, der ausreichend groß ist, um die Verbindung zwischen der Schnecke (32) und den Hindernissen (33; 39) rückgängig zu machen.

3. Luftfahrzeugfahrwerk nach Anspruch 1, bei dem die Hindernisse abnehmbar sind und auf der Seitenfläche (F) der Felge oder auf einem auf der Seitenfläche der Felge montierten Zwischenträger befestigt sind.

4. Luftfahrzeugfahrwerk nach Anspruch 3, bei dem mindestens ein Hindernis auf der Seitenfläche der Felge durch mindestens eine Schraube befestigt ist, die das Hindernis durchsetzt und die in die Felge oder in den Zwischenträger geschraubt ist.

5. Luftfahrzeugfahrwerk nach einem der Ansprüche 3 oder 4, bei dem die Hindernisse (39) frei drehbar um Achsen (X3) gelagert sind, die parallel zur Drehachse des Rades sind.

6. Luftfahrzeugfahrwerk nach einem der vorhergehenden Ansprüche, umfassend eine Radachse und ein erstes und ein zweites Rad (5a, 5b), die jeweils eine Felge (6) umfassen, die drehbar auf der Radachse gelagert ist, wobei das Fahrwerk ferner umfasst:
- einen ersten Drehantriebsaktor (12a) zum Drehantrieb des ersten Rades (5a) und einen zweiten Drehantriebsaktor (5b) zum Drehantrieb des zweiten Rades (5b), die jeweils eine Schnecke (32) umfassen, die dazu geeignet ist, mit den Hindernissen (33, 39) der Felge (6) des ersten Rades bzw. mit den Hindernissen (33, 39) der Felge des zweiten Rades zusammenzuwirken;
- einen Eingriffsaktor (13), der dazu geeignet ist, den ersten und den zweiten Antriebsaktor gleichzeitig zwischen einer Eingriffsposition, in der die Schnecke des ersten und des zweiten Aktors mit den Hindernissen der Felge (6) des ersten Rades bzw. des zweiten Rades zusammenwirken, und einer Freigabeposition zu bewegen, in der die Schnecken von den Felgen des ersten und des zweiten Rades entfernt sind.

7. Luftfahrzeugfahrwerk nach Anspruch 6, bei dem der erste Antriebsaktor und der zweite Antriebsaktor (12a, 12b) jeweils drehbar an dem Fahrwerk gelagert sind, um sich an die Felgen anzunähern oder sich von denselben zu entfernen, wobei der Eingriffsaktor ein Betätigungselement (23) und einen ersten und einen zweiten Arm (24a, 24b) umfasst, die jeweils an einem ihrer Enden drehbar an dem Betätigungselement und an dem anderen ihrer Enden drehbar an dem ersten bzw. an dem zweiten Antriebsaktor gelagert sind, so dass eine geradlinige Verschiebung des Betätigungselements (23) eine gleichzeitige Annäherung oder Entfernung des ersten und des zweiten Antriebsaktors an die bzw. von den Felgen des ersten und des zweiten Rades verursacht.

## Claims

1. Aircraft landing gear including an axle (4) and a wheel (5) that includes a rim (6) mounted to turn on the axle (4) about a first rotation axis (X1), the landing gear further including an actuator (12) for driving of the wheel (5) in rotation, **characterized in that** the rim (6) includes obstacles (33, 39) that project from a lateral face (F) of the rim and **in that** the driving actuator includes a lead screw (32) mounted to turn about a second rotation axis (X2) perpendicular to the first rotation axis (X1) and adapted to cooperate with the obstacles of the rim to drive the wheel in rotation.

2. Aircraft landing gear according to Claim 1, wherein the lead screw includes at least one thread (38) having a helix angle sufficiently large to render reversible the connection between the lead screw (32) and the obstacles (33, 39).

3. Aircraft landing gear according to Claim 1, wherein the obstacles are removable and attached to the lateral face (F) of the rim or to an intermediate support mounted on the lateral face of the rim.

4. Aircraft landing gear according to Claim 3, wherein at least one obstacle is fixed to the lateral face of the rim by means of at least one bolt that passes through the obstacle and is screwed into the rim or into the intermediate support.

5. Aircraft landing gear according to either one of Claims 3 or 4, wherein the obstacles (39) are mounted to pivot freely about axes (X3) parallel to the rotation axis of the wheel.

6. Aircraft landing gear according to any one of the preceding claims including an axle and first and second wheels (5a, 5b) each including a rim (6) mounted to turn on the axle, the landing gear further including:
- a first actuator (12a) for driving the first wheel (5a) in rotation and a second actuator (12b) for driving the second wheel (5b) in rotation, each including a lead screw (32) adapted to cooperate with respective obstacles (33, 39) of the rim (6) of the first wheel and with the obstacles (33, 39) of the rim of the second wheel;
- a meshing actuator (13) adapted to move the first and second driving actuators simultaneously between a meshing position in which the lead screws of the first and second actuators respectively cooperate with the obstacles of the rims (6) of the first and second wheels and a release position in which the lead screws are away from the rims of the first and second wheels.

7. Aircraft landing gear according to Claim 6, wherein the first and second driving actuators (12a, 12b) are ach mounted to pivot on the landing gear to move toward or away from the rims, wherein the meshing actuator includes an actuation member (23) and first and second arms (24a, 24b) each mounted at one of their ends to pivot on the actuating member and at the other of their ends to the first and second driving actuators, respectively, so that rectilinear movement of the actuating member (23) causes simultaneous movement of the first and second driving actuators toward or away from the rims of the first and second wheels.
